# EUROPÄISCHE PATENTSCHRIFT

(11) **EP 2 470 880 B1**
(45) Veröffentlichungstag und Bekanntmachung des Hinweises auf die Patenterteilung: **09.05.2018**
(21) Anmeldenummer: 10743190.0
(22) Anmeldetag: 20.08.2010
(51) Int. Cl.: G01N 11/16, G01N 29/02, G01N 29/036

(54) **SENSORANORDNUNG ZUR MESSUNG VON EIGENSCHAFTEN VON FLUIDEN**
SENSOR ARRANGEMENT FOR MEASURING PROPERTIES OF FLUIDS
DISPOSITIF DE DÉTECTION POUR LA MESURE DE PROPRIÉTÉS DE FLUIDES

(30) Priorität: 27.08.2009 AT 13452009
(43) Veröffentlichungstag der Anmeldung: 04.07.2012
(73) Patentinhaber: Johannes Kepler Universität, 4040 Linz (AT)
(72) Erfinder: REICHEL, Erwin, 3000 Leuven (BE); JACOBY, Bernhard, 4040 Linz (AT); RIESCH, Christian, 6820 Frastanz (AT)
(74) Vertreter: Westphal, Mussgnug & Partner Patentanwälte mbB
(86) Internationale Anmeldenummer: PCT/EP2010/062192
(87) Internationale Veröffentlichungsnummer: WO 2011/023642

(56) Entgegenhaltungen:
- ERWIN K REICHEL ET AL: "Remote electromagnetic excitation of miniaturized in-plane plate resonators for sensing applications", FREQUENCY CONTROL SYMPOSIUM, 2008 IEEE INTERNATIONAL, IEEE, PISCATAWAY, NJ, USA, 19. Mai 2008 (2008-05-19), Seiten 144-147, XP031319845, ISBN: 978-1-4244-1794-0
- RIESCH C ET AL: "A suspended plate viscosity sensor featuring in-plane vibration and piezoresistive readout; A suspended plate viscosity sensor", JOURNAL OF MICROMECHANICS & MICROENGINEERING, INSTITUTE OF PHYSICS PUBLISHING, BRISTOL, GB, Bd. 19, Nr. 7, 1. Juli 2009 (2009-07-01), Seite 75010, XP020160907, ISSN: 0960-1317
- LUCKLUM F ET AL: "Novel magnetic-acoustic resonator sensors for remote liquid phase measurement and mass detection", SENSORS AND ACTUATORS A, ELSEVIER SEQUOIA S.A., LAUSANNE, CH, Bd. 145-146, 1. Juli 2008 (2008-07-01), Seiten 44-51, XP022716414, ISSN: 0924-4247, DOI: DOI:10.1016/J.SNA.2007.10.031 [gefunden am 2007-10-18]
- FRIEDER LUCKLUM ET AL: "Multi-mode excitation of electromagnetic-acoustic resonant sensor arrays", FREQUENCY CONTROL SYMPOSIUM, 2008 IEEE INTERNATIONAL, IEEE, PISCATAWAY, NJ, USA, 19 May 2008 (2008-05-19), pages 53-57, XP031319824, ISBN: 978-1-4244-1794-0
- FLUCKIGER M ET AL: "A microfabricated and microassembled wireless resonator", SENSORS AND ACTUATORS A: PHYSICAL, ELSEVIER BV, NL, vol. 154, no. 1, 31 August 2009 (2009-08-31), pages 109-116, XP026498382, ISSN: 0924-4247, DOI: 10.1016/J.SNA.2009.07.012 [retrieved on 2009-07-24]
- LUCKLUM F ET AL: "Novel Magnetic-Acoustic Face Shear Mode Resonators for Liquid Property Sensing", SOLID-STATE SENSORS, ACTUATORS AND MICROSYSTEMS CONFERENCE, 2007. TRANSDUCERS 2007. INTERNATIONAL, IEEE, PISCATAWAY, NJ, USA, 10 June 2007 (2007-06-10), pages 1717-1720, XP031216383, ISBN: 978-1-4244-0841-2

## Beschreibung

### Technisches Gebiet

Die Erfindung betrifft eine mikromechanische Sensoranordnung zum Einsatz in der Prozessmesstechnik, insbesondere eine Sensoranordnung mit einem mit Hilfe von Lorentz-Kräften angeregten mikromechanischen, metallischen Resonator zur Messung von Viskosität und/oder Dichte von Flüssigkeiten.

### Hintergrund

Viskoeleastische Eigenschaften von Flüssigkeiten, insbesondere auch solche mit komplexem Fließverhalten (wie z.B. nichtnewtonsche Fluide) werden üblicherweise im Labor z.B. mit Hilfe von Schwingungsviskosimetern gemessen. Die Schwingungseigenschaften eines Schwingkörpers unter Einfluss der viskosen Flüssigkeit werden dabei bis zu einer Frequenz von einigen wenigen hundert Hertz gemessen. Zur Ermittlung der Viskosität kann es erforderlich sein, die Dichte der Flüssigkeit zu kennen oder diese mitzumessen.

In der Prozessmesstechnik können zur on-line Überwachung von Prozessen MEMS-Komponenten oder Schwingquarze als Viskositätssensoren Anwendung finden, die typischerweise bei viel höheren Frequenzen arbeiten, wie z.B. bei einigen Megahertz im Fall von TSM-Schwingquarzen (TSM steht für: "thickness shear mode"). Aus diesem Grund können gegenwärtige für die Prozessmesstechnik verfügbare Viskositätssensoren hauptsächlich bei der Überwachung von einfachen (newtonschen) Flüssigkeiten eingesetzt werden, deren viskoses Verhalten mit einem einzigen Viskositätsparameter (z.B. der dynamischen Viskosität η) beschreibbar ist. Die mit derartigen Sensoren bei hohen Frequenzen erzielten Messergebnisse für die Viskosität nichtnewtonscher Fluide sind jedoch häufig nicht mit im Labor ermittelten Referenzwerten vergleichbar.

Bei neusten Entwicklungen wird versucht, in Halbleitertechnik hergestellte und federnd gelagerte Schwingplatten bei niedrigeren Schwingfrequenzen (bis ca. 16 kHz) zur Viskositätsmessung zu verwenden, wobei die Schwingungsamplitude mit Hilfe von piezoresistiven Siliziumschichten gemessen wird. Derartige Sensoren sind jedoch aufwändig in der Herstellung und bereiten mitunter Schwierigkeiten mit leitenden Flüssigkeiten. Eine Variante eines derartigen Sensors ist z.B. in der Publikation C. Riesch et al., A suspended plate viscosity sensor featurein in-plane vibration and piezoresistive readout, In: Journal of Micromechanics and Microengineering, Vol. 19, Nr. 7, IOP Publishing, 2009*,* beschrieben.

Die Publikation E. Reichel, et al., Remote Electromagnetic Excitation of Miniaturized In-Plane Plate Resonators for Sensing Applications, In: Proc. 2008 IEEE International Frequency Control Symposium, Honolulu, IEEE UFFC, S. 144-147, 2008*,* beschreibt eine Sensoranordnung mit einem metallischen Rahmen und einem metallischen Resonator, der über Federelemente an dem Rahmen aufgehängt ist. Die Einkopplung des Erregerstromes in den Resonator erfolgt transformatorisch über eine Erregerspule, die in dem metallischen Rahmen einen Wirbelstrom induziert. Der metallische Rahmen stellt für das Sensorssignal jedoch eine vergleichsweise hohe elektrische Last dar, was sich negativ auf das Signal-/ Rauschverhältnis auswirken kann. Ähnliche Konzepte werden in den Publikationen F. Lucklum, B. Jakoby, Novel magnetic-acoustic resonator sensors for remote liquid phase measurement and mass detection, In: Sensors and Actuators A: Physical, Vol. 145-146" S. 44-51, 2008*,* und F. Lucklum, B. Jakoby, Multi-Mode Excitation of Electromagnetic-Acoustic Resonant Sensor Arrays, In: IEEE Proc. of the 2008 IEEE International Frequency Control Symposium, S. 53-57, 2008*,* und F. Lucklum, B. Jakoby, Novel Magnetic-Acoustic Face Shear Mode Resonators for Liquid Property Sensing, In: Proc of the TRANSDUCERS 2007, International Solid-State Sensors, Actuators and Microsystems Conference, S. 1717-1720, 2007*,* beschrieben. Die Publikation M. Flückiger et al., A microfabricated and microassembled wireless resonator, In: Sensors and Actuators A: Physical, Vol. 154, Nr. 1, S. 109-116, 2009*,* beschreibt einen drahtlosen elektroakustischen Resonator.

Die der Erfindung zugrunde liegende Aufgabe besteht darin, eine in der Prozessmesstechnik einsetzbare Sensoranordnung zur Messung von physikalischen Eigenschaften von Flüssigkeiten, insbesondere Viskosität, zu schaffen, die einfach herzustellen ist und die bei derart niedrigen Frequenzen betrieben werden kann, dass die erzielten Messwerte mit herkömmlich ermittelten Laborwerten vergleichbar sind.

### Zusammenfassung der Erfindung

Diese Aufgabe wird durch die Sensoranordnung zur Viskositäts- bzw. Dichtemessung gemäß Anspruch 1 gelöst. Beispielhafte Ausführungsformen der Erfindung sind Gegenstand der abhängigen Ansprüche.

Gemäß einem Beispiel der Erfindung umfasst eine Sensoranordnung zur Messung von Eigenschaften (z.B. Viskosität, Dichte) von Flüssigkeiten Folgendes: ein Trägersubstrat mit einer
Öffnung; ein metallisches, plattenförmiges Schwingelement, das an einer Oberfläche des Trägersubstrats und parallel zu dieser über dem Loch angeordnet ist; zumindest zwei metallische Kontaktelektroden, die auf dem Trägersubstrat angeordnet sind; zumindest zwei metallische Federelemente, wobei die Kontaktelektroden jeweils über ein Federelement mit dem Schwingelement verbunden sind, sodass dieses über die Federelemente am Trägersubstrat gelagert ist; und ein Magnet, der derart in der Nähe des Trägersubstrates angeordnet ist, dass die Magnetfeldlinien das plattenförmige Schwingelement durchsetzen.

Ein erfindungsgemäß aufgebauter Sensor eignet sich für schnelle Online-Messungen von z.B. Viskosität und/oder Dichte in der Prozessmesstechnik. Bei der Verwendung eines geeigneten Metalls kann der Sensor hochtemperaturfest und/oder säurebeständig ausgebildet sein. Die für eine Messung benötigte Menge an Flüssigkeit ist sehr gering. Der Sensor kann kostengünstig hergestellt und bei Bedarf auch in ein Handgerät eingebaut werden. Aufgrund des metallischen Schwingelementes kann die Sensoranordnung auch für Messungen in leitfähigen Flüssigkeiten eingesetzt werden. Ein weiteres Beispiel der Erfindung betrifft ein Verfahren gemäß Anspruch 14 zur Messung von Eigenschaften von Flüssigkeiten wie z.B. Viskosität und/oder Dichte mit einer Sensoranordnung, der zumindest die oben genannten Merkmale aufweist. Das Verfahren umfasst folgende Schritte: Einspeisen des Erregerstromes mit einer einstellbaren Frequenz in das Schwingelement über die Federelemente, sodass eine Resonanz des Schwingelementes angeregt wird; Messen der in dem Schwingelement aufgrund der In-plane-Schwingung induzierten Spannung für unterschiedliche Frequenzen eines vorgegebenen Frequenzbereichs des Erregerstromes; Ermitteln eines Frequenzganges für die induzierte Spannung über den vorgegebenen Frequenzbereich und detektieren einer Resonanz in dem Frequenzgang oder Ermitteln eines Frequenzganges für das Verhältnis von induzierter Spannung und Erregerstrom über den vorgegebenen Frequenzbereich und detektieren einer Resonanz in dem Frequenzgang; Berechnen einer die detektierte Resonanz charakterisierenden Kenngröße; Berechnen einer das physikalische Verhalten der das Schwingelement umgebenden Flüssigkeit beschreibenden Eigenschaft abhängig von der Kenngröße.

Eine die Resonanz charakterisierende Kenngröße kann z.B. die Resonanzfrequenz oder ein Dämpfungsmaß der Resonanz (bzw. das Gütemaß) sein. Eine das physikalische Verhalten der Flüssigkeit beschreibenden Eigenschaft kann z.B. deren dynamische Viskosität oder deren Dichte sein. Die Schwingungsmessung über die in dem Schwingelement induzierte Spannung erlaubt einen einfachen und kostengünstigen Aufbau des Sensors.

### Kurzbeschreibung der Abbildungen

Die Erfindung wird im Folgenden anhand von in den Abbildungen dargestellten Ausführungsbeispielen näher erläutert. In den Abbildungen zeigt:
- Figur 1: eine perspektivische Darstellung eines ersten Ausführungsbeispiels des erfindungsgemäßen Viskositätssensors mit der dazugehörigen elektronischen Beschaltung;
- Figur 2: zeigt (a) Messergebnisse für die Resonanz des Sensorelementes aus Figur 1 und (b) den Zusammenhang zwischen Dämpfung der Resonanz und Viskosität;
- Figur 3: ein zweites Ausführungsbeispiel des erfindungsgemäßen Viskositätssensors (Draufsicht) bei dem der Schwingkörper in einem inhomogenen Magnetfeld derart angeordnet ist, dass sich eine rotatorische Schwingung einstellt (die Deformation des Schwingelementes ist übertrieben dargestellt);
- Figur 4: zeigt eine schematische Schnittdarstellung der Sensoranordnung aus Figur 3.

In den Figuren bezeichnen gleiche Bezugszeichen gleiche Komponenten bzw. Signale mit gleicher Bedeutung.

### Detaillierte Beschreibung

Die im Folgenden beschriebenen Ausführungsbeispiele der vorliegenden Erfindung betreffen eine Sensoranordnung zur Viskositätsmessung. Mit geringfügigen Modifikationen, auf die später am Ende noch eingegangen wird, ist es jedoch auch möglich, zusätzlich den Massebelag (d.h. die Dichte) der Flüssigkeit zu messen.

Die erfindungsgemäße Sensoranordnung ermöglicht eine Messung der Viskosität bei Schwingfrequenzen von einigen wenigen Kilohertz (z.B. 0 bis 20 kHz) und ermöglicht damit einerseits die Ermittlung von Viskositätswerten, die mit Messwerten von hochwertigen Labormessgeräten vergleichbar sind, und andererseits wird die Frequenzlücke zu bekannten, hochfrequent arbeitenden Viskositätssensoren geschlossen.

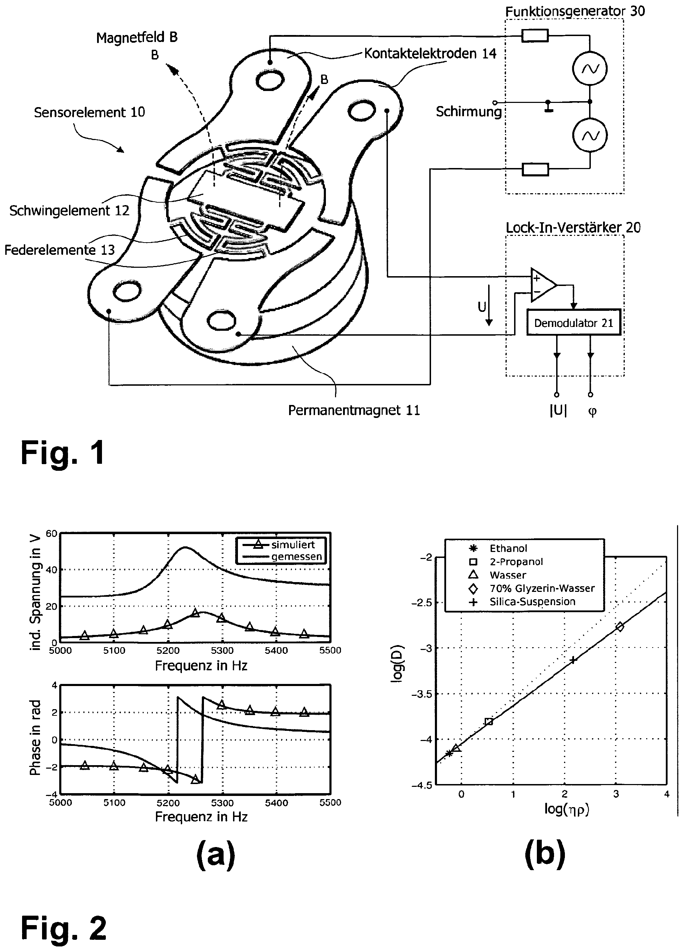

Der grundsätzliche Aufbau einer beispielhaften Sensoranordnung zum Messen der Viskosität und/oder der Dichte eines Fluids wird im Folgenden anhand der schematischen perspektivischen Darstellung in Figur 1 erläutert. Die Sensoranordnung aus Figur 1 umfasst ein Sensorelement 10, das mit dem viskosen Fluid interagiert, und die zum Betrieb des Sensorelementes notwendige Elektronik (z.B. Funktionsgenerator 30, Lock-in-Verstärker 20).

Das Sensorelement 10 selbst umfasst unter anderem ein mit Hilfe von zumindest zwei - im vorliegenden Fall vier - Federelementen 13 gelagertes plattenförmiges Schwingelement 12 (d.h. eine Metallmembran). Das Schwingelement 12 sowie die vier Federelemente 13 bestehen vollständig aus Metall bzw. einer Metalllegierung (z.B. Nickel-Messing), was eine verhältnismäßig große (gemessen an der räumlichen Größe des Sensorelementes) Masse und eine entsprechend gute elektrische Leitfähigkeit mit sich bringt. Optional kann eine Goldbeschichtung die Oberflächeneigenschaften (z.B. die Korrosionsbeständigkeit) des Schwingelementes 10 verbessern. Eine geeignete Wahl des Metalls (z.B. Tantal) ermöglicht einen temperaturbeständigen Sensor für die Messung bei hohen Temperaturen. Darüber hinaus kann das Sensorelement bei Bedarf z.B. zu Passivierungszwecken auch mit nichtleitenden Schichten versehen werden. Unter metallischem Schwingelement ist zu verstehen, dass das der Schwingkörper selbst (d.h. das schwingende Strukturelement als Ganzes) im wesentlichen (d.h. abgesehen von einer eventuell vorhandenen Passivierungsschicht) aus einem Metall besteht. Damit unterscheidet sich das Schwingelement z.B. von bekannten Sensoranordnungen, bei denen die Schwingkörper z.B. aus einem Halbleiter (Silizium) oder einem Isolator bestehen, auf dem separat Leiterbahnen aufgebracht werden müssen.

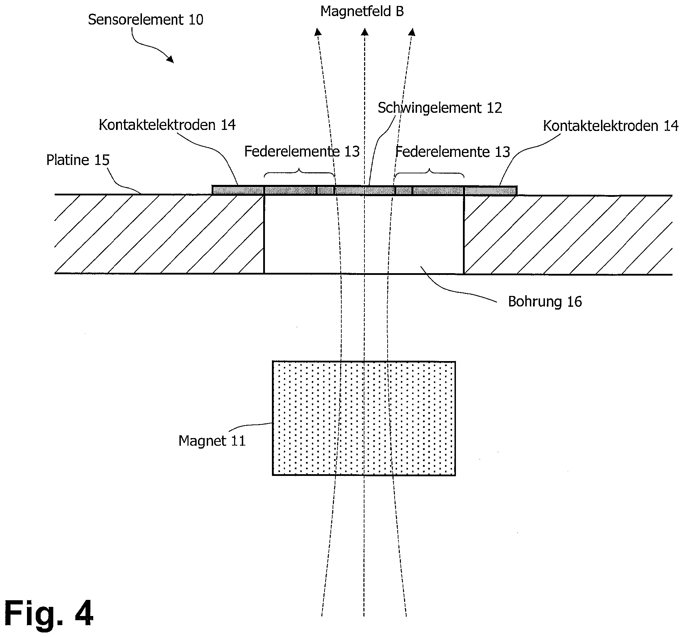

Die Sensoranordnung umfasst weiter für zumindest zwei (im dargestellten Fall vier) den Federelementen 13 entsprechende Kontaktelektroden 14, die mit dem Schwingelement 12 und den Federelementen 13 in einer Ebene liegen und aus dem selben Material sein können. Die Kontaktelektroden 14 sind auf einem Trägersubstrat 15 (in Figur 1 nicht dargestellt, siehe auch Figur 4) angeordnet und dienen zur elektrischen Kontaktierung des Sensorelementes 10 über die Federelemente 13 mit der Sensorelektronik (z.B. Funktionsgenerator 30, Lock-in-Verstärker 20). Das Trägersubstrat kann eine einfache Platine (FR4-Material aus glasfaserverstärktem Epoxidharz) sein, wie sie auch für gedruckte Schaltungen verwendet wird, jedoch können - je nach Anwendung - auch andere Materialien verwendet werden (z.B. Keramik für Anwendungen mit höheren Temperaturen). Die Tatsache, dass das Schwingelement aus Metall gefertigt ist erlaubt auch die Messung in leitfähigen Flüssigkeiten, solange die Leitfähigkeit der Flüssigkeit im Vergleich zur Leitfähigkeit des Metalls vernachlässigbar gering ist. Dies ist bei praktischen Anwendungen beinah immer der Fall. Falls notwendig kann das Schwingelement auch mit einer passivierenden Isolierschicht überzogen sein.

Das Schwingelement 12, die Federelemente 13 und die Kontaktelektroden 14 können z.B. mit Hilfe von Nassätzverfahren aus einer dünnen Metallschicht (z.B. 100µm Dicke) hergestellt werden. Details zur Herstellung der Sensoranordnung werden weiter unten anhand der Figur 4 noch genauer beschrieben.

Parallel zu der Ebene des Schwingelementes 10 ist ein Magnet so angeordnet, dass das von diesem erzeugte Magnetfeld das Schwingelement 10 durchsetzt. Die magnetischen Feldlinien stehen dabei annähernd rechtwinklig zur Plattenebene des plattenförmigen Schwingelementes 10. Die Verwendung eines Permanentmagneten 11 ermöglicht einen einfachen und kompakten Aufbau des Sensorelementes.

Zwei der Kontaktelektroden (in Figur 1 die beiden linken) sind zur elektronischen Ansteuerung beispielsweise mit einem Funktionsgenerator 30 verbunden, der als Erregerstrom einen Wechselstrom i_{EX} durch das plattenförmige Schwingelement 12 erzeugt. Der resultierende Stromdichtevektor J liegt in der Plattenebene des Schwingelementes 10 und zeigt annähernd von dem ersten zu dem zweiten Federelement 13, durch die der Strom i_{EX} fließt. Wenn das Magnetfeld B des Magneten 11 die Ebene des Schwingelementes 12 - wie oben erwähnt - annähernd in rechtem Winkel durchsetzt, dann liegt die auf das Schwingelement 12 wirkende Lorentz-Kraft F_{L} ebenfalls in der Plattenebene des Schwingelementes 12. Eine entsprechende Schwingung in der Plattenebene des Schwingelementes 12 (In-plane-Schwingung) wird auf diese Art angeregt.

Vereinfacht ausgedrückt bildet das federnd gelagerte, in viskose Flüssigkeit eingetauchte Schwingelement 12 ein FederMasse-Dämpfer-System, dessen Resonanzfrequenz von der Masse des Schwingelementes 12, der effektiven Federkonstanten der federnden Aufhängung des Schwingelementes 10 mit Hilfe der Federelemente 13 und der Dämpfung abhängt. Die Dämpfung des Systems - und damit der Gütefaktor (Q-Faktor) der Resonanz - wird dabei wesentlich von der Viskosität der das Schwingelement 12 umgebenden viskosen Flüssigkeit bestimmt.

Um die Dämpfung des Systems auswerten und daraus Rückschlüsse auf die Viskosität des den Sensor 10 umgebenden Mediums ziehen zu können, muss die Schwingungsamplitude des Schwingelementes 12 gemessen werden. Diese kann einfach dadurch ermittelt werden, dass die aufgrund des Magnetfeldes B und der Schwingungsbewegung des Schwingelementes 12 induzierte Spannung U an zwei gegenüberliegenden Kontaktelektroden 14 bei unterschiedlichen Schwingungsfrequenzen gemessen wird, d.h. es wird ein Frequenzgang der Schwingung in dem interessierenden Frequenzbereich (z.B. 500 Hz bis 10 kHZ) aufgenommen. Als Maß für die Veränderung (1. Ableitung nach der Zeit) der Schwingungsamplitude wird dabei die in dem Schwingelement aufgrund der Schwingung im Magnetfeld induzierte Spannung U herangezogen. Aus dem frequenzabhängigen Amplituden- und Phasengang der induzierten Spannung U kann der interessierende Dämpfungsfaktor D (= 1/Q) und daraus berechnet und daraus auf die Viskosität η der den Sensor umgebenden Flüssigkeit rückgeschlossen werden. Die Phase der induzierten Spannung U wird relativ zur Phasenlage des von dem Funktionsgenerator erzeugten Eingangssignal U_{EX} gemessen. Alternativ zum Frequenzgang der induzierten Spannung U kann auch der Frequenzgang der (komplexen) Impedanz gemessen werden, also der Frequenzgang U/i_{EX} des Verhältnisses zwischen induzierter Spannung U und Erregerstrom i_{EX}.

Die induzierte Spannung U kann stark verrauscht sein. Da jedoch die Frequenz bekannt ist (Sie ist gleich wie die Frequenz des die Schwingung anregenden Stromes i_{EX}.), kann zur Messung der Amplitude und der Phase der induzierten Spannung ein Lock-in-Verstärker 20 verwendet werden, mit dessen Hilfe es möglich ist, Signale auch bei sehr ungünstigen Signal-Rausch-Verhältnissen (SNR) zu messen.

Beispielhafte Messergebnisse, die mit der Sensoranordnung aus Figur 1 erzielt wurden, sind z.B. in der Figur 2 dargestellt. Figur 2a zeigt den Frequenzgang (Amplituden- und Phasengang) der induzierten Spannung U bei dem als viskoses Fluid Wasser verwendet wurde. Die Viskosität von Wasser beträgt bei 20° C. rund 1 mPa·s. Die gemessene Resonanzfrequenz des Sensorelementes 10 liegt bei rund 5230 Hz. Die Dämpfung des Schwingkreises wird durch den Dämpfungsfaktor D charakterisiert, wobei der Dämpfungsfaktor D der Kehrwert des Gütefaktors Q der Resonanz ist.

Figur 2b zeigt in doppelt logarithmischer Darstellung den Zusammenhang zwischen dem Dämpfungsfaktor D und dem Viskositäts-Dichte-Produkt ηρ für unterschiedliche Flüssigkeiten, wobei das Symbol η die dynamische Viskosität in Pa·s und das Symbol ρ die Dichte des viskosen Fluids in kg/m³ bezeichnet. In der (doppelt logarithmischen) Darstellung lässt sich ein (annähernd) linearer Zusammenhang zwischen dem Logarithmus des Dämpfungsfaktors log₁₀(D) = -log₁₀(Q) und dem Logarithmus des Viskositäts-Dichte-Produkts log₁₀(ηρ) beobachten.

Das Sensorelement aus Figur 1 wird durch einen Strom i_{EX} angeregt, der über die beiden linken Kontaktelektroden 14 und den damit verbundenen linken Federelementen 13 fließt. Die induzierte Spannung wird an den beiden rechten Kontaktelektroden 13 abgegriffen, welche über die damit verbundenen rechten Federelemente 13 mit dem Schwingungselement 12 elektrisch verbunden sind. Bei einem Magnetfeld B, das das Schwingelement 12 annähernd senkrecht durchsetzt resultiert daraus hauptsächlich eine In-plane-Schwingung (Schwingung in der Plattenebene). Es hat sich gezeigt, dass nur bei In-plane-Schwingungen - im Gegensatz zu Schwingungen normal zur Plattenebene (Out-of-plane-Schwingungen) - ein klar definierter Zusammenhang zwischen Viskosität und Dämpfung beobachtbar ist (vgl. Figur 1b).

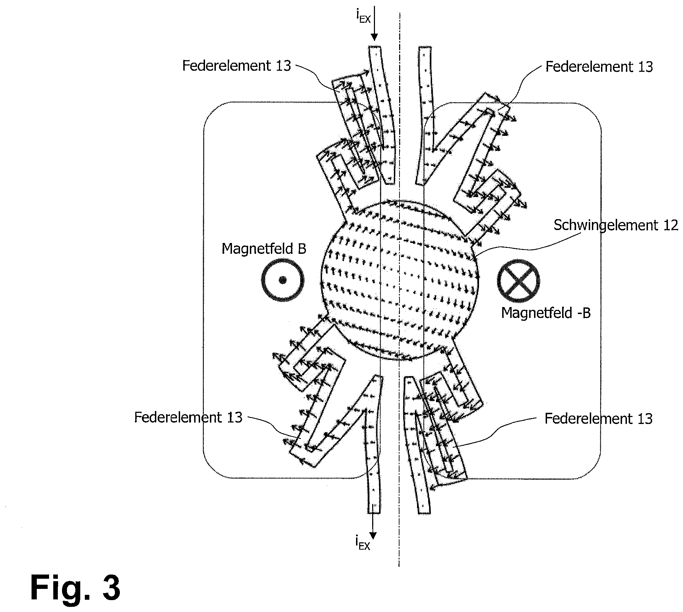

Ein weiteres Ausführungsbeispiel des Sensorelementes 10, bei dem das Schwingelement 12 eine rotatorische In-plane-Schwingung ausführt, ist in Figur 3 dargestellt. In der dargestellten Skizze ist vereinfacht nur das Schwingelement 12 und die Federelemente 13 in einer Draufsicht dargestellt. Im Gegensatz zu dem Beispiel aus Figur 1 ist das Schwingelement 12 keine rechteckige, sondern eine kreisförmige Platte, und das Magnetfeld B durchsetzt die Platte inhomogen. Im vorliegenden Fall durchsetzt das Magnetfeld B die Plattenebene des Schwingelementes 12 normal zur Plattenebene. Die Richtung des Magnetfeld B ist in der linken Hälfte des Schwingelementes 12 genau entgegengesetzt zur Richtung in der rechten Hälfte. Das Sensorelement ist insofern "schiefsymetrisch", was durch die strichpunktierte Symmetrielinie dargestellt ist.

Das Schwingelement 12 ist mit Hilfe von vier Federelementen 13 gelagert, wobei zwei diagonal gegenüber liegende Federelemente 13 zum Einspeisen des Erregerstromes i_{EX} und die zwei verbleibenden Federelemente zum Abgreifen der induzierten Spannung U verwendet werden. Die Ansteuerung des Sensorelementes 10 und die Auswertung der induzierten Spannung U erfolgt bei diesem Ausführungsbeispiel analog zu dem Beispiel aus Figur 1. Die Pfeile in Figur 2 zeigen die (simulierte) (Lorentz-) Kraftwirkung auf das Schwingelement 12 aufgrund eines Erregerstromes i_{EX}. Es ist deutlich erkennbar, dass eine derartige Kraftwirkung eine In-plane-Rotationsschwingung des plattenförmigen Schwingelementes 12 anregt. Diese In-plane-Rotationsschwingung weist geringere Out-of-plane-Bewegungskomponenten auf, die jedoch in der Praxis immer auftreten. Wie bereits erwähnt ist eine möglichst reine In-plane-Schwingung im Hinblick auf einen einfachen Zusammenhang zwischen Dämpfungsfaktor D und Viskositäts-Dicht-Produkt ηρ wünschenswert.

Eine Out-of-plane-Schwingung kann wünschenswert sein, wenn gleichzeitig (oder alternativ) die Dichte des Fluids gemessen werden soll. Auf diesen Fall wird am Ende noch genauer eingegangen.

Zum besseren Verständnis ist in der Figur 4 eine Schnittdarstellung des Sensorelementes 10 aus Figur 3 abgebildet. Der Schnitt verläuft durch die Symmetrielinie aus Figur 3. Auf einem Trägersubstrat 15 (Leiterplatte, Keramiksubstrat, etc.) ist eine dünne Metallisierungsschicht (Komponenten 12, 13 und 14) in der Größenordnung von 100µm Dicke angeordnet. Bei der Herstellung des Sensorelementes kann z.B. eine Metallfolie auf das Substrat 15 aufgebracht werden und anschließend mit Hilfe von Nassätzen oder Laserschneiden so strukturiert werden, dass die in den Figuren 1 oder 3 gezeigte Struktur aus Schwingelement 12, Federelemente 13 und Kontaktelektroden 14 entsteht. Im Substrat befindet sich ein Durchgangsloch 16 mit einem Durchmesser von rund 5 mm bis 10 mm, das an einem Ende von dem Schwingelement 12 und den Federelementen 13 teilweise abgedeckt wird. Das plattenförmige Schwingelement 12 ist also nur an über die Federelemente 13 mit den auf dem Substrat 15 angeordneten Kontaktelektroden 14 verbunden, so dass die viskose Flüssigkeit von beiden Seiten das Schwingelement 12 berühren und dieses frei in der Flüssigkeit schwingen kann.

Der Magnet 11 kann über Distanzstücke (nicht dargestellt) an dem Substrat 15 befestigt sein, so dass der Eintritt der Flüssigkeit in die Bohrung 16 nicht behindert wird. In alternativen Ausführungsbeispielen der Erfindung kann der Magnet 11 auch außerhalb der Flüssigkeit angeordnet sein. Mit einem ringförmigen Magnet, der konzentrisch zu er Bohrung 16 in der Nähe des Substrates 15 angeordnet ist, lässt sich eine gute Geometrie der magnetischen Feldlinien erzielen, wodurch wiederum unerwünschte Out-of-plane-Komponenten der Schwingungsbewegung des Schwingelementes 12 reduziert werden.

Die in den Abbildungen dargestellten Ausführungsbeispiele der Erfindung weisen alle 4 Kontaktelektroden 14 die je über ein Federelement 13 mit dem Schwingelement 12 verbunden sind. Über je zwei Kontaktelektroden und Federelemente wird der Erregerstrom i_{EX} in das Schwingelement 12 eingespeist und über die zwei anderen Kontaktelektroden und Federelemente wird die induzierte Spannung U abgegriffen. Es ist jedoch möglich zur Einspeisung des Erregerstromes i_{EX} und zur Messung der induzierten Spannung U dieselben Kontaktelemente zu verwenden, sodass im Prinzip zwei Federelemente 13 ausreichen würden. Des Weiteren sind auch Sensoranordnungen mit drei Federelementen möglich, bei denen nur eine Kontaktelektrode zum Führen des Erregerstromes und zum Abgriff der Spannung doppelt benutzt wird. Bei derartigen Anordnungen ist der induzierten Wechselspannung U jedoch ein verhältnismäßig großer Gleichanteil überlagert, was die Spannungsmessung erschwert. In diesem Fall, kann die Verwendung einer Messbrücke zur Spannungsmessung notwendig sein. In praktischen Versuchen wurde mit der Variante mit vier Federelementen bessere Ergebnisse erzielt.

Bei den oben diskutierten Ausführungsbeispielen durchsetzt das Magnetfeld B das Schwingelement in einem annähernd rechten Winkel, was die Anregung von In-plane-Schwingungsmoden (translatorische bzw. rotatorische) begünstigt und Out-of-plane-Schwingungsmoden vermeidet. Für eine Viskositätsmessung ist es günstig, möglichst nur In-plane-Schwingungsmoden anzuregen. In manchen Anwendungen kann es jedoch auch sinnvoll sein, das Magnetfeld so auszurichten, dass es auch Komponenten in der Plattenebene des Schwingelementes 12 aufweist, sodass Out-of-plane-Schwingungsmoden angeregt werden.

In-plane-Schwingungsmoden und Out-of-plane-Schwingungsmoden haben unterschiedliche Resonanzfrequenzen, sodass, wenn beide Schwingungsmoden angeregt werden, zwei Resonanzen in dem gemessenen Frequenzgang detektierbar sind, die unabhängig voneinander ausgewertet werden können. Die Resonanz des In-plane-Schwingungsmode wird - wie oben erläutert - zur Berechnung der Viskosität η zw. des Viskosität-Dichte-Produkts ηρ herangezogen. Aus der Resonanzfrequenz des Out-of-plane-Schwingungsmode kann die Dichte ρ berechnet werden. Der Zusammenhang zwischen der Resonanzfrequenz eines Feder-Masse-Dämpfer-Systems und der schwingenden Masse (bzw. der Dichte der Flüssigkeit) ist an sich bekannt. Das Feder-Masse-Dämpfer-Modell kann auch für die Berechnung der Dichte herangezogen werden.

Die In-plane- und Out-of-plane-Schwingungsmoden überlagern sich linear und können daher getrennt voneinander betrachtet werden. Mit einer Sensoranordnung gemäß einem der Beispiele aus den Figuren 1, 3 und 4 kann man, je nach Orientierung des Magnetfeldes, Viskosität, Dichte, oder auch beides messen.

## Patentansprüche

1. Sensoranordnung zur Messung von Flüssigkeitseigenschaften, die Folgendes aufweist:
ein Trägersubstrat (15) mit einer Öffnung (16);
ein metallisches, plattenförmiges Schwingelement (12), das an einer Oberfläche des Trägersubstrats (15) und parallel zu dieser über der Öffnung (16) angeordnet ist;
zumindest zwei elektrisch leitfähige Kontaktelektroden (14), die auf dem Trägersubstrat (15) angeordnet sind;
zumindest zwei metallische Federelemente (13), wobei das Schwingelement (12) über die Federelemente (13) am Trägersubstrat gelagert ist und die Kontaktelektroden (14) mit den Federelementen (13) elektrisch verbunden sind; und
ein Magnet (11), der derart in der Nähe des Trägersubstrates (15) angeordnet ist, dass die Magnetfeldlinien (B) das plattenförmige Schwingelement (12) durchsetzen,
eine Ansteuereinheit (30), die über zwei der Kontaktelektroden (14) zwei der Federelemente (13) kontaktiert und dazu ausgebildet ist, über die Kontaktelektroden (14) und die Federelemente (13) einen Erregerstrom (i_{EX}) mit einstellbarer Frequenz in das Schwingelement (12) einzuspeisen, wodurch das Schwingelement zu einer In-Plane-Schwingung angeregt wird; und
eine Auswerteeinheit (20), die dazu ausgebildet ist, über die Kontaktelektroden (14) und die Federelemente (13) eine in der Schwingplatte induzierte Spannung (U) abzugreifen und einen Messwert für die Spannungsamplitude der Spannung und/oder für die Phase der Spannung (U) relativ zum Erregerstrom (i_{EX}) bereitzustellen.

2. Sensoranordnung gemäß Anspruch 1, bei der eine zu messende Flüssigkeitseigenschaft eine Viskosität repräsentiert,
wobei die Magnetfeldlinien (B) das plattenförmige Schwingelement (12) derart durchsetzen, dass bei der Einspeisung des Erregerstroms (i_{EX}) in das Schwingelement (12) über die Kontaktelektroden (14), das plattenförmige Schwingelement (12) zu einer In-plane-Schwingung angeregt wird.

3. Sensoranordnung gemäß Anspruch 1 oder 2, bei der die Auswerteeinheit (20) dazu ausgebildet ist, die Frequenz des Erregerstromes (i_{EX}) über einen vorgegebenen Frequenzbereich zu variieren, und so einen Frequenzgang der induzierten Spannung (U) in diesem Frequenzbereich zu bestimmen.

4. Sensoranordnung gemäß Anspruch 1 oder 2, bei der die Auswerteeinheit (20) dazu ausgebildet ist einen Frequenzgang des Verhältnisses zwischen der induzierten Spannung (U) und dem Erregerstrom (i_{EX}) in einem vorgegebenen Frequenzbereich zu bestimmen.

5. Sensoranordnung gemäß einem der Ansprüche 3 oder 4, bei der die Auswerteeinheit (20) dazu ausgebildet ist,
zumindest eine Resonanz in dem gemessenen Frequenzgang zu detektieren,
für jede detektierte Resonanz zumindest eine die Resonanz charakterisierende Kenngröße zu bestimmen und
abhängig von der zumindest einen Kenngröße eine oder mehrere das physikalische Verhalten der Flüssigkeit beschreibende Eigenschaften, insbesondere Viskosität oder Dichte, zu berechnen.

6. Sensoranordnung gemäß Anspruch 5, bei der die Auswerteeinheit (20) dazu ausgebildet ist, eine Resonanz in dem gemessenen Frequenzgang zu detektieren, einen die Dämpfung der Resonanz beschreibenden Dämpfungskoeffizienten (D) zu bestimmen und abhängig von dem Dämpfungskoeffizienten (D) die Viskosität (η) der Flüssigkeit zu berechnen.

7. Sensoranordnung gemäß Anspruch 5, bei der die Auswerteeinheit (20) dazu ausgebildet ist, eine zweite Resonanz in dem gemessenen Frequenzgang zu detektieren, die korrespondierende Resonanzfrequenz zu bestimmen und abhängig von der Resonanzfrequenz die Dichte (p) der Flüssigkeit zu berechnen.

8. Sensoranordnung gemäß Anspruch 7, bei der die Magnetfeldlinien (B) Komponenten in der Plattenebene und normal zur plattenebene des Schwingelements (12) aufweisen, sodass sowohl eine Out-of-plane-Schwingung als auch eine In-plane-Schwingung des Schwingelements (12) angeregt wird.

9. Sensoranordnung gemäß Anspruch 8, bei der die Auswerteeinheit (20) dazu ausgebildet ist, eine erste und eine zweite Resonanz in dem gemessenen Frequenzgang zu detektieren, einen die Dämpfung der ersten Resonanz beschreibenden Dämpfungskoeffizienten (D) und die Resonanzfrequenz der zweiten Resonanz zu bestimmen, und abhängig von der Resonanzfrequenz der zweiten Resonanz die Dichte (p) der Flüssigkeit und abhängig von dem Dämpfungskoeffizienten (D) der ersten Resonanz die Viskosität (η) der Flüssigkeit zu berechnen.

10. Sensoranordnung gemäß einem der Ansprüche 1 bis 9,
wobei der Magnet (11) derart in der Nähe des Trägersubstrates (15) angeordnet ist, dass die Magnetfeldlinien (B) zwei Hälften des plattenförmigen Schwingelements (12) in entgegengesetzter Richtung durchsetzen.

11. Sensoranordnung gemäß einem der Ansprüche 1 bis 10,
die vier Kontaktelektroden (14) und vier Federelemente (13) aufweist, über die das Schwingelement (12) mit den Kontaktelektroden (14) einerseits elektrisch verbunden and andererseits an diesen mechanisch gelagert ist, wobei die Kontaktelektroden (14) und die Federelemente (13) symmetrisch um eine Symmetrieachse des Schwingelementes (12) angeordnet sind, und
bei der über jeweils zwei der vier Federelemente (13) der Erregerstrom (i_{EX}) durch das Schwingelement (12) geleitet wird, und über die anderen beiden Federelemente die in dem Schwingelement induzierte Spannung (U) zur Spannungsmessung abgegriffen wird.

12. Sensoranordnung gemäß Anspruch 11, bei der der Erregerstrom (i_{EX}) über zwei Federelemente (13) durch das Schwingelement (12) geleitet wird, die sich auf der gleichen Seite der Symmetrieachse befinden, sodass eine translatorische In-plane-Schwingung des Schwingelementes (12) angeregt wird.

13. Sensoranordnung gemäß Anspruch 11,
wobei der Magnet (11) derart in der Nähe des Trägersubstrates (15) angeordnet ist, dass die Magnetfeldlinien (B) zwei Hälften des plattenförmigen Schwingelements (12) in entgegengesetzter Richtung durchsetzen, und
wobei der Erregerstrom (i_{EX}) über zwei Federelemente (13) durch das Schwingelement (12) geleitet wird, wobei sich eines dieser Federelemente (13) diagonal gegenüber dem anderen Federelement (13) befindet, sodass eine rotatorische In-plane-Schwingung des Schwingelementes (12) angeregt wird.

14. Verfahren zum Messen von Flüssigkeitseigenschaften, insbesondere der Viskosität und/oder der Dichte, mittels einer Sensoranordnung gemäß einem der Ansprüche 1 bis 13; das Verfahren umfasst folgende Schritte:
Einspeisen des Erregerstromes (i_{EX}) mit einer einstellbaren Frequenz in das Schwingelement (12) über die Federelemente (13), sodass eine Resonanz einer In-Plane-Schwingung des Schwingelementes (12) angeregt wird;
Messen der in dem Schwingelement (12) aufgrund der angeregten Schwingung induzierten Spannung (U) für unterschiedliche Frequenzen eines vorgegebenen Frequenzbereichs des Erregerstromes (i_{EX});
Ermitteln eines Frequenzganges für die induzierte Spannung (U) über den vorgegebenen Frequenzbereich und detektieren einer Resonanz in dem Frequenzgang oder
Ermitteln des Frequenzganges für das Verhältnis von induzierter Spannung (U) zum Erregerstrom (i_{EX}) über den vorgegebenen Frequenzbereich und detektieren einer Resonanz in dem Frequenzgang;
Berechnen einer die detektierte Resonanz charakterisierenden Kenngröße (D);
Berechnen einer das physikalische Verhalten der das Schwingelement (12) umgebenden Flüssigkeit beschreibenden Eigenschaft abhängig von der Kenngröße (D).

## Claims

1. Sensor arrangement for measuring fluid properties, comprising the following:
a carrier substrate (15) having an opening (16);
a metal plate-shaped vibrating element (12), which is arranged at a surface of the carrier substrate (15) and parallel to said surface over the opening (16);
at least two electrically conductive contact electrodes (14), which is arranged on the carrier substrate (15);
at least two metal spring elements (13), wherein the vibrating element (12) is mounted at the carrier substrate using the spring elements (13) and the contact electrodes (14) are electrically connected to the spring elements (13); and
a magnet (11), which is arranged near to the carrier substrate (15) such that the magnetic field lines penetrate the plate-shaped vibrating element (12),
a control unit (30), which contacts two of the spring elements (13) via two of the contact electrodes (14) and is designed to supply the vibrating element (12) with a field current (i_{EX}) having an adjustable frequency via the contact electrodes (14) and the spring elements (13), whereby the vibrating element is excited into an in-plane vibration; and
an evaluation unit (20), which is designed to tap a voltage (U) induced in the vibrating plate via the contact electrodes (14) and the spring elements (13) and to provide a measurement value for the voltage amplitude of the voltage and/or for the phase of the voltage (U) relative to the field current (i_{EX}).

2. Sensor arrangement according to claim 1, wherein a fluid property to be measured represents a viscosity,
wherein the magnet field lines (B) penetrate the plate-shaped vibrating element (12) that, when supplying the vibrating element (12) with the field current (i_{EX}) via the contact electrodes (14), the plate-shaped vibrating element (12) is excited into an in-plane vibration.

3. Sensor arrangement according to one of the claims 1 or 2, wherein the evaluation unit (20) is designed to vary the frequency of the field current (i_{EX}) over a given frequency range, and so to determine a frequency response of the induced voltage (U) in that frequency range.

4. Sensor arrangement according to one of the claims 1 or 2, wherein the evaluation unit (20) is designed to determine a frequency response of the relationship between the induced voltage (U) and the field current (i_{EX}) in a given frequency range.

5. Sensor arrangement according to one of the claims 3 or 4, wherein the evaluation unit (20) is designed:
to detect at least one resonance in the measured frequency response,
to determine at least one parameter characterizing the resonance for each detected resonance, and
to calculate one or several properties describing the physical behavior of the fluid, in particular viscosity or density, depending on the at least one parameter.

6. Sensor arrangement according to claim 5, wherein the evaluation unit (20) is designed to detect a resonance in the measured frequency response, to determine a damping coefficient (D) characterizing the damping of the resonance, and to calculate the viscosity (n) of the fluid depending on the damping coefficient (D).

7. Sensor arrangement according to claim 5, wherein the evaluation unit (20) is designed to detect a second resonance in the measured frequency response, to determine the corresponding resonance frequency and to calculate the density (p) of the fluid depending on the resonance frequency.

8. Sensor arrangement according to claim 7, wherein the magnetic field lines (B) have components in the plane of the plate and normal to the plane of the plate of the vibrating element (12), so that both an out-of-plane vibration and an in-plane vibration of the vibrating element (12) are excited.

9. Sensor arrangement according to claim 8, wherein the evaluation unit (20) is designed to detect a first and a second resonance in the measured frequency response, to determine a damping coefficient (D) characterizing the damping of the first resonance and the resonance frequency of the second resonance, and to calculate the density (p) of the fluid depending on the resonance frequency of the second resonance and the viscosity (η) of the fluid depending on the damping coefficient (D) of the first resonance.

10. Sensor arrangement according to one of the claims 1 to 9,
wherein the magnet (11) is arranged near to the carrier substrate (15) such that the magnetic field lines (B) penetrate two halves of the plate-shaped vibrating element (12) in opposite directions.

11. Sensor arrangement according to one of the claims 1 to 10,
having four contact electrodes (14) and four spring elements (13), by means of which the vibrating element (12) is electrically connected on the one side to the contact electrodes (14) and on the other side is mechanically mounted to these, wherein the contact electrodes (14) and the spring elements (13) are arranged symmetrically around a symmetry axis of the vibrating element (12), and
wherein the field current (i_{EX}) is led through the vibrating element (12) via respectively two of the four spring elements (13), and the voltage (U) induced in the vibrating element is tapped for measuring the voltage via the other two spring elements.

12. Sensor arrangement according to claim 11, wherein the field current (i_{EX}) is led through the vibrating element (12) via two spring elements (12), which are arranged on the same side of the symmetry axis, so that a translational in-plane vibration of the vibration element (12) is excited.

13. Sensor arrangement according to claim 11,
wherein the magnet (11) is arranged near the carrier substrate (15) such that the magnetic field lines (B) penetrate two halves of the plate-shaped vibrating element (12) in opposite directions, and
wherein the field current (i_{EX}) is led through the vibrating element (12) via two spring elements (12), wherein one of those spring elements (13) is arranged diagonally opposite to the other spring element (13), so that a rotational in-plane vibration of the vibration element (12) is excited.

14. Method for measuring fluid properties, in particular the viscosity and/or the density, by means of a sensor arrangement according to one of the claims 1 to 13;
the method comprising the following steps:
injecting the field current (i_{EX}) having an adjustable frequency into the vibration element (12) via the spring elements (13), so that a resonance of an in-plane vibration of the vibration element (12) is excited;
measuring the voltage (U) induced in the vibration element (12) due to the excited vibration for several frequencies of a given frequency range of the field current (i_{EX});
determining a frequency response for the induced voltage (U) over the given frequency range and detecting a resonance in the frequency response or
determining a frequency response for the relationship between the induced voltage (U) and the field current (i_{EX}) over the given frequency range and detecting a resonance in the frequency response;
calculating a parameter (D) characterizing the detected resonance;
calculating a property describing the physical behavior of the fluid surrounding the vibration element (12) depending on the parameter (D).

## Revendications

1. Ensemble capteur pour mesurer des propriétés de fluide, comprenant :
un substrat porteur (15) avec une ouverture (16) ;
un élément oscillant (12) métallique en forme de plaque, qui est arrangé au-dessus de l'ouverture (16) sur une surface du substrat porteur (15) et parallèle à celle-ci ;
au moins deux électrodes de contact (14) électriquement conductrices, qui sont arrangées sur le substrat porteur (15) ;
au moins deux éléments ressorts (13) métalliques, l'élément oscillant (12) étant monté sur le substrat porteur à l'aide des éléments ressorts (13) et les électrodes de contact (14) étant reliées électriquement aux éléments ressorts (13) ; et
un aimant (11), qui est arrangé à proximité du substrat porteur (15) de telle sorte que les lignes de champ magnétique (B) pénètrent l'élément oscillant (12) en forme de plaque,
une unité de commande (30), qui met en contact deux des éléments ressorts (13) via deux des électrodes de contact (14) et qui est agencée pour fournir un courant d'excitation (i_{EX}) à fréquence variable à l'élément oscillant (12) via les électrodes de contact (14) et les éléments ressorts (13), excitant ainsi l'élément oscillant pour produire une oscillation dans le plan ; et
une unité d'évaluation (20), qui est agencée pour relever une tension (U) induite dans la plaque oscillante via les électrodes de contact (14) et les éléments ressorts (13) et pour fournir une valeur de mesure pour l'amplitude en tension de la tension et/ou pour la phase de la tension (U) par rapport au courant d'excitation (i_{EX}).

2. Ensemble capteur selon la revendication 1, dans lequel une propriété de fluide à mesurer représente une viscosité,
les lignes de champ magnétique (B) pénétrant l'élément oscillant (12) en forme de plaque de telle façon que, lorsque l'élément oscillant (12) est alimenté par le courant d'excitation (i_{EX}) via les électrodes de contact (14), l'élément oscillant (12) en forme de plaque est excité pour produire une oscillation dans le plan.

3. Ensemble capteur selon l'une des revendications 1 ou 2, dans lequel l'unité d'évaluation (20) est agencée pour varier la fréquence du courant d'excitation (i_{EX}) sur une plage de fréquences prédéterminée, et de déterminer ainsi une réponse en fréquence de la tension (U) induite dans cette plage de fréquences.

4. Ensemble capteur selon l'une des revendications 1 ou 2, dans lequel l'unité d'évaluation (20) est agencée pour déterminer une réponse en fréquence de la relation entre la tension (U) induite et le courant d'excitation (i_{EX}) dans une plage de fréquences prédéterminée.

5. Ensemble capteur selon l'une des revendications 3 ou 4, dans lequel l'unité d'évaluation (20) est agencée pour
détecter au moins une résonance dans la réponse en fréquence mesurée,
déterminer pour chaque résonance détectée au moins un paramètre caractérisant la résonance et
calculer une ou plusieurs propriétés décrivant le comportement physique du fluide, en particulier la viscosité ou la densité, en fonction du ou des paramètres.

6. Ensemble capteur selon la revendication 5, dans lequel l'unité d'évaluation (20) est agencée pour détecter une résonance dans la réponse en fréquence mesurée, déterminer un coefficient d'amortissement (D) décrivant l'amortissement de la résonance et calculer la viscosité (η) du fluide en fonction du coefficient d'amortissement (D).

7. Ensemble capteur selon la revendication 5, dans lequel l'unité d'évaluation (20) est agencée pour détecter une seconde résonance dans la réponse en fréquence mesurée, déterminer la fréquence de résonnance correspondante et calculer la densité (p) du fluide en fonction de la fréquence de résonance.

8. Ensemble capteur selon la revendication 7, dans lequel les lignes de champ magnétique (B) présentent des composantes dans le plan de la plaque et normales au plan de la plaque de l'élément oscillant (12), de façon qu'une oscillation dans le plan et une oscillation hors plan soient toutes deux excitées.

9. Ensemble capteur selon la revendication 8, dans lequel l'unité d'évaluation (20) est agencée pour détecter une première et une seconde résonance dans la réponse en fréquence mesurée, déterminer un coefficient d'amortissement (D) décrivant un amortissement de la première résonance et une fréquence de résonance de la seconde résonance, et calculer la densité (p) du fluide en fonction de la fréquence de la seconde résonance et la viscosité (η) du fluide en fonction du coefficient d'amortissement (D) de la première résonance.

10. Ensemble capteur selon l'une des revendications 1 à 9,
l'aimant (11) étant arrangé à proximité du substrat porteur (15) de manière à ce que les lignes de champ magnétique (B) pénètrent deux moitiés de l'élément oscillant (12) en forme de plaque dans des directions opposées.

11. Ensemble capteur selon l'une des revendications 1 à 10,
comprenant quatre électrodes de contact (14) et quatre éléments ressorts (13), par le biais desquels l'élément oscillant (12) est d'une part relié électriquement aux électrodes de contact (14) et d'autre part monté mécaniquement sur celles-ci, les électrodes de contact (14) et les éléments ressorts (13) étant arrangés symétriquement par rapport à un axe de symétrie de l'élément oscillant (12), et
dans lequel le courant d'excitation (i_{EX}) est conduit le long de l'élément oscillant (12) via respectivement deux des quatre éléments ressorts (13), et la tension (U) induite dans l'élément oscillant pour la mesure de tension est relevée via les deux autres éléments ressorts.

12. Ensemble capteur selon la revendication 11, dans lequel le courant d'excitation (i_{EX}) est conduit le long de l'élément oscillant (12) via deux éléments ressorts (13) qui se trouvent du même côté de l'axe de symétrie, si bien qu'une oscillation dans le plan en translation est excitée.

13. Ensemble capteur selon la revendication 11,
dans lequel l'aimant (11) est arrangé à proximité du substrat porteur (15) de manière à ce que les lignes de champ magnétique (B) pénètrent deux moitiés de l'élément oscillant (12) en forme de plaque dans des directions opposées, et
dans lequel le courant d'excitation (i_{EX}) est conduit le long de l'élément oscillant (12) via deux éléments ressorts (13), un de ces éléments ressorts (13) se trouvant diagonalement opposé à l'autre élément ressort (13), si bien qu'une oscillation dans le plan en rotation est excitée.

14. Procédé pour mesurer des propriétés de fluide, en particulier la viscosité et/ou la densité, à l'aide d'un ensemble capteur selon l'une des revendications 1 à 13 ;
le procédé comprenant les étapes suivantes :
l'injection du courant d'excitation (i_{EX}) à fréquence variable dans l'élément oscillant (12) via les éléments ressorts (13), si bien qu'une résonance d'une oscillation dans le plan de l'élément oscillant (12) est excitée ;
la mesure de la tension (U) induite dans l'élément oscillant (12) en raison de l'oscillation excitée pour diverses fréquences d'une plage de fréquences du courant d'excitation (i_{EX}) ;
la détermination d'une réponse en fréquence pour la tension (U) induite sur la plage de fréquences prédéterminée et la détection d'une résonance dans la réponse en fréquence ou
la détermination d'une réponse en fréquence pour la relation entre la tension (U) induite et le courant d'excitation (i_{EX}) sur la plage de fréquences prédéterminée et la détection d'une résonance dans la réponse en fréquence ;
le calcul d'un paramètre (D) caractérisant la résonance détectée ;
le calcul d'une propriété décrivant le comportement physique du fluide entourant l'élément oscillant (12) en fonction du paramètre (D).
